# EUROPÄISCHE PATENTSCHRIFT

(11) **EP 2 898 158 B1**
(45) Veröffentlichungstag und Bekanntmachung des Hinweises auf die Patenterteilung: **23.03.2016**
(21) Anmeldenummer: 13771086.9
(22) Anmeldetag: 20.09.2013
(51) Int. Cl.: E04G 5/04, E04G 21/32, F16B 37/12

(54) **BEFESTIGUNGSELEMENT FÜR EINE SICHERHEITSEINRICHTUNG**
FASTENING ELEMENT FOR A SAFETY DEVICE
ELÉMENT DE FIXATION POUR UN DISPOSITIF DE SÉCURITÉ

(30) Priorität: 21.09.2012 AT 3762012
(43) Veröffentlichungstag der Anmeldung: 29.07.2015
(73) Patentinhaber: Safe Patentverwaltungs - Und Verwertungs GmbH, 4582 Spital/Pyhrn (AT)
(72) Erfinder: AICHHOLZER, Sepp, Anton, A-9800 Spittal/Drau (AT); CANINS, Karl-Heinz, A-9620 Hermagor (AT); REITEGGER, Rudolf, A-8911Admont (AT)
(74) Vertreter: KLIMENT & HENHAPEL
(86) Internationale Anmeldenummer: PCT/EP2013/069590
(87) Internationale Veröffentlichungsnummer: WO 2014/044804

(56) Entgegenhaltungen:
- EP-A1- 0 908 581
- DE-A1-102009 032 969
- US-A- 4 309 135

## Beschreibung

### GEBIET DER ERFINDUNG

Die vorliegende Erfindung bezieht sich auf ein Befestigungselement für die Fixierung einer Sicherheitseinrichtung, beispielsweise eines Anschlagpunkts oder eines Gerüsts, in einem Untergrund, insbesondere einem Mauerwerk, welches Befestigungselement mindestens ein eine Längsachse aufweisendes Anschlussmittel zum Anschluss des Befestigungselements an mindestens ein im Untergrund befestigbares bzw. befestigtes Verankerungsmittel umfasst.

### STAND DER TECHNIK

Sicherheitseinrichtungen, wie z.B. Anschlagpunkte zur Absturzsicherung, werden nicht nur bei bereits fertiggestellten Gebäuden benötigt, sondern sind auch schon während der Bauphase ein wichtiges Instrument zur Erhöhung der Arbeitssicherheit. Beispielsweise erfordert das Hochziehen von Wänden aus Beton oder Betonfertigteilen die Bereitstellung von Sicherheitseinrichtungen, wie z.B. Anschlagpunkten der Klasse A1 nach EN 795, im Sinne der Arbeitssicherheit und darüber hinaus die temporäre Montage von Konsolengerüsten.

Dem Stand der Technik entsprechend werden Anschlagpunkte der Klasse A1 nach EN 795 grundsätzlich starr befestigt bzw. starr mit dem Untergrund verbunden und sind zumeist selbst starre Konstruktionen, die bei bestimmungsgemäßer Belastung keine maßgeblichen Verformungen zulassen. Dem Stand der Technik entsprechende Anschlagpunkte sind so konstruiert und in Stahlbetonfertigteilen und bewehrten Ortbetonstrukturen versetzt, dass sie bei etwa erfolgter Beschädigung nicht ohne weiteres ausgetauscht werden können, weil sie mit dem Untergrund vorzugsweise durch geeignete Mörtel oder Klebstoffe starr verbunden sind.

Dies bedingt, dass die im Falle eines Absturzes auftretenden erheblichen Kräfte am Anschlagpunkt selbst keine planmäßige Dämpfung erfahren und als dynamisch wirkende Last in den jeweiligen Untergrund eingeleitet werden. 28 Tage lang ausgehärtete Betonstrukturen halten diesen Beanspruchungen üblicherweise problemlos stand.

Es ist nun aber vielfach so, dass in der Baustellenpraxis die volle Abbindezeit von Beton mit 28 Tagen nicht abgewartet wird und Betonstrukturen als Fertigteile und auch als örtlich geschalte Konstruktionen schon weit früher, also schon einige Tage nach dem Betoniervorgang transportiert, montiert oder im jeweils möglichen Ausmaß statisch belastet werden.

Es ist jedoch mit dem Stand der Technik entsprechenden Befestigungsmitteln derzeit nicht möglich, Absturzlasten, wie in EN 795 definiert, in schlanken Betonfertigteilen, wie z.B. Betonhohlwänden, schon 3 Tage nach deren Produktion ohne deren Beschädigung einzuleiten.

Es ist nach dem Stand der Technik auch nicht möglich, Befestigungselemente für Anschlagpunkte der Klasse A1 in die Schalung von Ortbetonstrukturen so einzubauen, dass diese schon kurz nach dem Ausschalen bestimmungsgemäß verwendet werden können.

Bekannte Befestigungsmittel zur Montage von Anschlagpunkten der Klasse A1 nach EN 795 werden vor allem im Nachhinein im jeweiligen Bauteil versetzt, indem dort Löcher gebohrt und die Anschlagpunkte mit Verbundmörtel eingeklebt oder mittels geeigneter Dübel befestigt werden.

Alle diese Konstruktionen haben die Eigenschaft, dass sie auf Betonfestigkeiten ausgelegt sind, die in der Praxis aus zeitlichen Gründen meist noch nicht vorhanden sind. Vor allem durch dynamische Lasten, wie sie bei Abstürzen von Personen oder Material auftreten, kann es zu lokalen Beschädigungen der Untergrundstruktur kommen, wenn diese dynamischen Lasten ohne Dämpfung in den noch nicht ausgehärteten Untergrund eingeleitet werden. Im Extremfall kann dies dazu führen, dass Anschlagpunkte oder Befestigungselemente von Konsolengerüsten aus der Betonoberfläche ausbrechen und sich der vorangegangene Absturzvorgang weiter fortsetzt.

Die Wahrscheinlichkeit für ein solches Szenario ist bei weniger festem Untergrund, wie z.B. Mauerwerk aus Mantelbeton, Kalksandstein, Gasbeton oder Hohlziegeln, nochmals erhöht. Speziell hoch wärmedämmendes Ziegelmauerwerk weist wegen des dort verwendeten porosierten Ziegelscherbens zumeist geringe statische Festigkeit auf. Aufgrund der hohen Biegemomente bzw. Lochleibungsdrücke, die durch starr versetzte und in sich unflexible Anschlagpunkte gemäß dem Stand der Technik vor allem bei (bestimmungsgemäßer) dynamischer Belastung in den Untergrund übertragen werden, kann es daher mitunter zu sprödem Bruch an der Oberfläche kommen.

US 4 309 135 zeigt ein Befestigungselement aus dem Stand der Technik, welches alle Merkmale des einleitenden Teils des Anspruchs 1 offenbart.

### AUFGABE DER ERFINDUNG

Aufgabe der vorliegenden Erfindung ist es, eine Befestigungsmöglichkeit für Sicherheitseinrichtungen, wie z.B. Anschlagpunkte, oder allgemein für Montagepunkte, wie z.B. für Konsolengerüste, zu schaffen, die die oben genannten Nachteile vermeidet. Insbesondere soll ein Befestigungselement geschaffen werden, das eine lokale Zerstörung oder gar ein Ausbrechen des Untergrunds bei Auftreten von dynamischen Lasten, wie sie z.B. beim gesicherten Absturz von Personen oder Material entstehen, verhindert.

### DARSTELLUNG DER ERFINDUNG

Die obige Aufgabe wird durch ein Befestigungselement nach Anspruch 1 gelöst.

Kern der Erfindung zur Lösung obiger Aufgaben ist es, ein Befestigungselement für eine Sicherheitseinrichtung mit energieabsorbierender Funktionalität auszustatten. Die bei gesicherten Abstürzen auftretenden dynamischen Kräfte können somit soweit gedämpft werden, dass die (verbleibenden) Lasten beispielsweise auch in Untergrund bestehend aus nicht vollständig ausgehärteten Stahlbetonfertigteilen oder aus nicht vollständig ausgehärteten, vorzugsweise bewehrten Ortbetonstrukturen sicher eingeleitet werden können, ohne dass es zu lokalen Beschädigungen oder gar zum Ausbrechen des Untergrunds kommt.

Hierzu weist das erfindungsgemäße Befestigungselement ein Absorberelement auf, welches in einem Absorberabschnitt ein Anschlussmittel zumindest abschnittsweise, vorzugsweise vollumfänglich umgibt. Das Anschlussmittel weist eine Längsachse auf und dient zum Anschluss des Befestigungselements an ein Verankerungsmittel, dass im Untergrund befestigbar bzw. befestigt ist.

Das Absorberelement umgibt das Anschlussmittel im Absorberabschnitt entlang dessen Längsachse und ist mit dem Anschlussmittel verbunden, und zwar so, dass es bei einer dynamischen Krafteinwirkung parallel zur Längsachse des Anschlussmittels zu einer Verschiebung des Absorberelements gegenüber dem Anschlussmittel entlang dessen Längsachse kommen kann. Hierdurch wird die auftretende (dynamische) Last gedämpft. Es ist dabei nicht primär beabsichtigt, die bei einem gesicherten Absturz auf eine Person einwirkenden Kräfte zu minimieren, obgleich dies unter Umständen ein nützlicher Nebeneffekt des erfindungsgemäßen Befestigungselements sein kann. D.h. das erfindungsgemäße Befestigungselement kann eine persönliche Sicherheitsausrüstung, wie z.B. einen Falldämpfer, nicht ersetzen.

Um bei der Verschiebung des Absorberelements gegenüber dem Anschlussmittel unter Einwirkung hoher dynamischer Last einen möglichst großen Teil dieser Last zu dämpfen, ist eine hohe Reibung zwischen Absorberelement und Anschlussmittel wünschenswert. Daher ist das Absorberelement kraftschlüssig mit dem mindestens einen Anschlussmittel verbunden.

Ein weiterer Effekt des das Anschlussmittel umgebenden Absorberelements ist, dass der Durchmesser des Befestigungselements im Absorberabschnitt im Vergleich zum Durchmesser des Anschlussmittels alleine vergrößert wird. Hierdurch wird der Lochleibungsdruck, der bei dynamischen Lasten quer zur Längsachse des Anschlussmittels auftritt, reduziert. Insbesondere bei wenig festem Untergrund, wie z.B. Mauerwerk aus Mantelbeton, Kalksandstein, Gasbeton oder Hohlziegeln, kann hierdurch die Wahrscheinlichkeit für ein Ausbrechen des Untergrunds bei Auftreten dynamischer Lasten weiter reduziert werden. Indem nicht das gesamte Anschlussmittel mit größerem Durchmesser ausgeführt wird, können Material und Kosten gespart werden.

Um ein planes Anliegen des Anschlagpunkts am Befestigungselement zu ermöglichen, ist außerdem eine Anschlussplatte vorgesehen, an welcher das mindestens eine Anschlussmittel angeordnet ist. Wenn der Anschlagpunkt durch Verschraubung mit mehreren Anschlussmitteln des Befestigungselements an diesem montiert werden soll, erleichtert die Anschlussplatte außerdem die Montage, indem sie die Position der Anschlussmittel zueinander fixiert.

Um eine dynamische Last absorbieren zu können, die eine Komponente normal auf den Untergrund und damit normal auf die Anschlussplatte aufweist, ist das mindestens eine Anschlussmittel winkelig, vorzugsweise rechtwinkelig an der Anschlussplatte angeordnet bzw. steht von der Anschlussplatte winkelig, vorzugsweise rechtwinkelig ab. Ist das mindestens eine Anschlussmittel rechtwinkelig zur Anschlussplatte angeordnet, so steht die Längsachse des mindestens einen Anschlussmittels normal auf die Anschlussplatte.

Entsprechend ist es bei einem Befestigungselement für die Fixierung einer Sicherheitseinrichtung, beispielsweise eines Anschlagpunkts oder eines Gerüsts, in einem Untergrund, insbesondere einem Mauerwerk, welches Befestigungselement mindestens ein eine Längsachse aufweisendes Anschlussmittel zum Anschluss des Befestigungselements an mindestens ein im Untergrund befestigbares bzw. befestigtes Verankerungsmittel umfasst, erfindungsgemäß vorgesehen, dass das Befestigungselement weiters eine Anschlussplatte umfasst, von welcher das mindestens eine Anschlussmittel winkelig, vorzugsweise rechtwinkelig abstehend, angeordnet ist, sowie mindestens ein Absorberelement, welches einen Absorberabschnitt des mindestens einen Anschlussmittels zumindest abschnittsweise entlang der Längsachse des Anschlussmittels kraftschlüssig umgibt.

Um eine plastische Verformung bei einer dynamischen Last mit einer Komponente, die normal auf den Untergrund steht, durch eine Verschiebung des Absorberelements entlang der Längsachse des mindestens einen Anschlussmittels zu ermöglichen, ist eine gewisse Reibung oder Verzahnung des Absorberelements mit dem Untergrund erforderlich. Daher weist das Absorberelement eine Oberfläche auf, die vorzugsweise nicht glatt, sondern mit Sperrelementen versehen ist bzw. Sperrelemente ausbildet. Diese Sperrelemente weisen in einer Richtung entlang der Längsachse des Anschlussmittels gesehen radial von der Längsachse weg. Entsprechend ist es bei einer bevorzugten Ausführungsform des erfindungsgemäßen Befestigungselements vorgesehen, dass das mindestens eine Absorberelement eine Oberfläche aufweist, die mit mindestens einem Sperrelement versehen ist und/oder mindestens ein Sperrelement ausbildet, welches in einer Richtung entlang der Längsachse des Anschlussmittels gesehen, radial von der Längsachse weg weist.

Beispielsweise wäre es denkbar, dass das Absorberelement hülsenförmig, beispielsweise in Form eines Hohlzylinders, ausgeführt ist und an seiner Oberfläche Noppen, Rillen bzw. Rippen als Sperrelemente aufweist. Weiters kann die Oberfläche des Absorberelements durchbrochen sein, sodass die verbleibende Oberfläche Sperrelemente ausbildet. Ist beispielsweise das Absorberelement spiralförmig ausgeführt, so besteht die Oberfläche des Absorberelements aus den Oberflächen der Spiralwindungen. In diesem Fall bilden die Oberflächen der Spiralwindungen die Sperrelemente aus.

Daher ist es bei einer bevorzugten Ausführungsform des erfindungsgemäßen Befestigungselements vorgesehen, dass das mindestens eine Absorberelement spiralförmig ausgeführt ist. Selbstverständlich ist es denkbar, dass auf den Oberflächen der Spiralwindungen weitere Sperrelemente, beispielsweise in Form von Noppen, angeordnet sind, um die Verzahnung mit dem Untergrund weiter zu erhöhen.

Um ein spiralförmiges Absorberelement zu realisieren, ist es bei einer bevorzugten Ausführungsform des erfindungsgemäßen Befestigungselements vorgesehen, dass als das mindestens eine Absorberelement mindestens ein Gewindeeinsatz vorgesehen ist. Die Windungen des Gewindeeinsatzes bzw. deren Oberflächen bilden in diesem Fall die Sperrelemente aus.

Um eine kraftschlüssige Verbindung des Gewindeeinsatzes mit dem mindestens einen Anschlussmittel zu realisieren, ist es bei einer weiteren bevorzugten Ausführungsform des erfindungsgemäßen Befestigungselements vorgesehen, dass der mindestens eine Gewindeeinsatz auf das mindestens eine Anschlussmittel aufgeschrumpft ist.

Um einen Anschlagpunkt mit dem Befestigungsmittel verbinden zu können, ist es bei einer bevorzugten Ausführungsform des erfindungsgemäßen Befestigungselements vorgesehen, dass das mindestens eine Anschlussmittel ein Innengewinde zur Montage der Sicherheitseinrichtung durch Verschraubung aufweist. Es können somit unterschiedliche Anschlagpunkte montiert werden bzw. kann der Anschlagpunkt zu einem späteren Zeitpunkt ausgetauscht werden.

Damit der Anschlagpunkt mit den Innengewinden der Anschlussmittel bei vorhandener Anschlussplatte verbunden werden kann, ist es bei einer bevorzugten Ausführungsform des erfindungsgemäßen Befestigungselements vorgesehen, dass die Anschlussplatte mindestens eine Montageöffnung aufweist, die über dem Innengewinde des mindestens einen Anschlussmittels angeordnet ist, um die Montage der Sicherheitseinrichtung durch Verschraubung zu ermöglichen.

Um in diesem Falle eine Verschraubung ohne Verkanten zu ermöglichen, stehen die Innengewinde, die vorzugsweise entlang der jeweiligen Längsachse der Anschlussmittel verlaufen, normal auf die Anschlussplatte.

Eine optisch besonders ansprechende Lösung ist die versenkte Montage des Anschlagpunkts in einem dosenförmigen Behältnis. Daher ist es bei einer bevorzugten Ausführungsform des erfindungsgemäßen Befestigungselements vorgesehen, dass die Anschlussplatte eine Rückseite eines dosenförmigen Behältnisses ausbildet, welches weiters eine Vorderseite aufweist, wobei an der Vorderseite eine Öffnung angeordnet ist. Der Anschlagpunkt kann somit durch die Öffnung zur Anschlussplatte geführt und mit den Anschlussmitteln verschraubt werden. Die Öffnung an der Vorderseite kann mit einer Abdeckung versehen werden, wenn der Anschlagpunkt nicht sichtbar sein soll.

Das dosenförmige Behältnis erleichtert außerdem das Einputzen des Befestigungselements. Hierfür wird in dem dosenförmigen Behältnis ein Montagekern, vorzugsweise aus Kunststoff, platziert, der das dosenförmige Behältnis ausfüllt und die Öffnung so verschließt, dass sich eine plane Vorderseite ergibt. Nach dem Einputzen bzw. Verputzen kann der Montagekern entfernt werden und der Anschlagpunkt montiert werden. Wird vorerst kein Anschlagpunkt benötigt, kann der Montagekern auch im dosenförmigen Behältnis verbleiben und überputzt oder übermalt werden, sodass das vorhandene Befestigungsmittel optisch nicht auffällt.

Um auch bei dynamischen Lasten quer zur Längsachse des mindestens einen Anschlussmittels Energie durch plastische Verformung absorbieren zu können, ist es bei einer bevorzugten Ausführungsform des erfindungsgemäßen Befestigungselements vorgesehen, dass das mindestens eine Anschlussmittel eine im Absorberabschnitt angeordnete Sollknickstelle aufweist, um eine plastische Verformung des Befestigungselements bei dynamischer Krafteinwirkung quer zur Längsachse des mindestens einen Anschlussmittels zu ermöglichen.

Für die Auslegung bzw. Anordnung der Sollknickstelle spielt die Biegesteifigkeit des Anschlussmittels eine wichtige Rolle. Die Auslegung der Sollknickstelle wird dabei vereinfacht, wenn die Biegesteifigkeit des Anschlussmittels durch den aufgeschrumpften Gewindeeinsatz nicht oder nur unwesentlich verändert wird. Dies ist in der Praxis beispielsweise dann gegeben, wenn die Biegesteifigkeit des Gewindeeinsatzes maximal 0,2%, bevorzugt maximal 0,05% der Biegesteifigkeit des Anschlussmittels beträgt. Daher ist es bei einer bevorzugten Ausführungsform des erfindungsgemäßen Befestigungselements vorgesehen, dass die Biegesteifigkeit des mindestens einen Absorberelements geringer ist als die Biegesteifigkeit des mindestens einen Anschlussmittels, um die Biegeeigenschaften des mindestens einen Anschlussmittels nicht oder nur unwesentlich zu beeinflussen.

Insbesondere für die temporäre Montage von Konsolengerüsten und die Befestigung von Anschlagpunkten beim Hochziehen von Wänden aus Beton oder Betonfertigteilen eignet sich ein Ankerhals als Anschlussmittel. Der Ankerhals weist dabei ein Innengewinde zur Montage des Anschlagpunkts bzw. des Konsolengerüsts auf. Der Ankerhals wird an Baustahlbewehrung als Verankerungsmittel angeschlossen, indem die Baustahlbewehrung durch eine Öse im Ankerhals geführt bzw. in einer Öse des Ankerhalses aufgenommen wird. Bevorzugt handelt es sich bei der Öse um eine zentrale Bewehrungsöse, die im Ankerhals angeordnet ist. Besonders bevorzugt ist die zentrale Bewehrungsöse in einem Endbereich des Ankerhalses angeordnet, wobei dieser Endbereich der Anschlussplatte gegenüberliegt. Daher ist es bei einer bevorzugten Ausführungsform des erfindungsgemäßen Befestigungselements vorgesehen, dass als Anschlussmittel mindestens ein Ankerhals mit Innengewinde vorgesehen ist. Bzw. ist es bei einer besonders bevorzugten Ausführungsform des erfindungsgemäßen Befestigungselements vorgesehen, dass als Anschlussmittel genau ein Ankerhals mit Innengewinde vorgesehen ist, der eine zentrale Bewehrungsöse zur Aufnahme von Baustahlbewehrung als Verankerungsmittel aufweist.

Hierdurch wird insbesondere die Befestigung von Anschlagpunkten oder Konsolengerüsten in sogenannten Hohlwänden ermöglicht, d.h. in Betonfertigteilwänden, welche lagerichtig montiert und anschließend mit Beton vergossen werden. Der auf den Ankerhals aufgeschrumpfte Gewindeeinsatz wirkt auch dann durch Bewegung unter starker Reibung entlang der Längsachse des Ankerhalses als Absorber, wenn die Stärke des Betonfertigteils, in dem das Befestigungselement eingebaut ist, so gering ist, dass nur ein Teil des Absorberelements von Beton ummantelt und sohin mit diesem verzahnt ist. Das bedeutet, dass ein großer Teil des Ankerhalses aus einer Rückseite einer Außenschale des Betonfertigteils herausragt, wie es speziell bei Betonhohlwänden der Fall ist, bevor sie mit Beton vergossen werden, und trotzdem dynamische Lasten gedämpft und damit aufgenommen werden können.

Im Hinblick auf statische Lasten ist es zur Verstärkung der Verbindung des Befestigungselements mit dem Untergrund bei einer weiteren bevorzugten Ausführungsform des erfindungsgemäßen Befestigungselements vorgesehen, dass an der Anschlussplatte weiters eine zusätzliche lastverteilende Platte und/oder Knotenbleche mit zusätzlichen Ösen zur Aufnahme von Baustahlbewehrung angeordnet sind. Die Anordnung der Ösen an den Knotenblechen erfolgt so, dass eine statisch wirksame Einbindung des Befestigungselements in handelsübliche Gitterträger, wie sie in Hohlwänden eingebaut werden, möglich ist. Durch eine versetzte Anordnung der Ösen in den Knotenblechen und Anordnung von Bewehrungsstäben in den Ösen kann das Befestigungselement sowohl auf Zug als auch auf Druck statisch höher beansprucht werden. Durch die Dämpfung mittels des Absorberelements bzw. mittels des aufgeschrumpften Gewindeeinsatzes werden die auf die Knotenbleche einwirkenden dynamischen Kraftspitzen verringert.

Die zusätzliche lastverteilende Platte wirkt sich insbesondere beim Einsatz des Befestigungselements in relativ dünnen Betonhohlwänden positiv aus, wenn der Ankerhals aus deren Rückseite herausschaut, da eine Beanspruchung des Ankerhalses stets auch zu einer Beanspruchung der zusätzlichen lastverteilenden Platte führt. Das Fehlen einer wirksamen Bewehrungsöse für den Ankerhals kann somit zumindest teilweise kompensiert werden.

Die Wahrscheinlichkeit für ein abruptes Abscheren der zur Verbindung des Befestigungselements mit dem Untergrund verwendeten Stahlbewehrung kann jedenfalls deutlich reduziert werden.

Für die Montage von Konsolengerüsten ist das Innengewinde im Ankerhals üblicherweise gröber ausgeführt als für die Montage von Anschlagpunkten - typischerweise kommen für die Befestigung von Konsolengerüsten B15-Schrauben zum Einsatz. In diesem Fall kann eine Ausnehmung des Ankerhalses, an welche das Innengewinde anschließt, in Form einer Kegelhülse zur Anschlussplatte hin aufgeweitet sein, um die Aufnahme der Schrauben zu erleichtern.

Um sowohl Konsolengerüste als auch Anschlagpunkte mit dem Befestigungselement verschrauben zu können, können neben dem Innengewinde im Ankerhals für die Montage von Konsolengerüsten zusätzliche Innengewinde in der zusätzlichen lastverteilenden Platte für die Montage von Anschlagpunkten vorgesehen sein. Das Innengewinde im Ankerhals kann dann beispielsweise für B15-Schrauben und die zusätzlichen Innengewinde können für kleiner dimensionierte Schrauben des Anschlagpunkts (beispielsweise M10-Schrauben) ausgelegt sein. Entsprechend ist es bei einer weiteren bevorzugten Ausführungsform des erfindungsgemäßen Befestigungselements vorgesehen, dass die zusätzliche lastverteilenden Platte mindestens ein zusätzliches Innengewinde umfasst und dass die Anschlussplatte mindestens eine zusätzliche Montageöffnung aufweist, die über dem mindestens einen zusätzlichen Innengewinde angeordnet ist, um die Montage einer zusätzlichen oder alternativen Sicherheitseinrichtung durch Verschraubung zu ermöglichen.

Im Hinblick auf die Verschraubung von Anschlagpunkten mit den jeweils ein Innengewinde aufweisenden Anschlussmitteln eignen sich für letztere grundsätzlich Gewindehülsen. Entsprechend ist es bei einer weiteren bevorzugten Ausführungsform des erfindungsgemäßen Befestigungselements vorgesehen, dass als Anschlussmittel mindestens eine, vorzugsweise genau zwei Gewindehülse/n vorgesehen ist/sind.

Insbesondere für die Befestigung von Anschlagpunkten in weniger festem Untergrund, wie z.B. Mauerwerk aus Mantelbeton, Kalksandstein, Gasbeton oder Hohlziegeln, ist es bei einer weiteren bevorzugten Ausführungsform des erfindungsgemäßen Befestigungselements vorgesehen, dass als Verankerungsmittel mindestens ein Befestigungsbolzen vorgesehen ist, der mit der mindestens einen Gewindehülse verbunden, vorzugsweise verschraubt ist. Es wäre also auch vorstellbar, die Befestigungsbolzen einstückig mit den Gewindehülsen auszuführen.

Zur Verbindung der Befestigungsbolzen, die vorzugsweise als Gewindestangen ausgeführt sind, mit dem Untergrund werden in diesen Löcher gebohrt. Nach einer Reinigung der Löcher werden die Befestigungsbolzen in den Löchern platziert, worauf die Löcher mit Verbundmörtel gefüllt werden. Bei Hohlziegeln als Untergrund kann nach dem Reinigen der Löcher zusätzlich die Platzierung einer Siebhülse vorgesehen sein.

Die Sollknickstelle einer Gewindehülse kann durch die Länge der Schraube, die für die Verschraubung des Anschlagpunkts verwendet wird, definiert werden. Indem diese Schraube das Innengewinde der Gewindehülse nicht über die gesamte Erstreckung des Innengewindes entlang der Längsachse der Gewindehülse ausfüllt, verbleibt ein leerer Bereich der Gewindehülse mit Innengewinde. In diesem Bereich knickt die Gewindehülse leichter als im Vergleich zu jenem Bereich, in welchem das Innengewinde von der Schraube für die Verschraubung des Anschlagpunkts ausgefüllt ist. Für das Knicken der Gewindehülse an der so definierten Sollknickstelle ist einzig die Biegesteifigkeit der Gewindehülse ausschlaggebend.

Im Falle der Ausführung des Befestigungsbolzens als Gewindestange, die in die Gewindehülse geschraubt wird, können Länge und Position der Sollknickstelle zusätzlich durch die Tiefe der Verschraubung des Befestigungsbolzens in der Gewindehülse beeinflusst werden. In jenem Bereich, in welchem das Innengewinde vom Befestigungsbolzen ausgefüllt ist knickt die Gewindehülse schwerer als im frei bleibenden Bereich mit Innengewinde, der zwischen der Schraube für die Verschraubung des Anschlagpunkts und dem Befestigungsbolzen liegt. Die Position der Sollknickstelle ergibt sich damit in diesem frei bleibenden Bereich. Mit anderen Worten, durch die vorhandene Diskontinuität der Biegesteifigkeit der Gewindehülse mit der eingeschraubten Schraube für die Verschraubung des Anschlagpunkts und vorzugsweise mit dem eingeschraubten Befestigungsbolzen wird die Lage der Sollknickstelle gesteuert.

Da Gewindestangen in unterschiedlichsten Längen verfügbar sind, kann die Länge der Befestigungsbolzen leicht an den gerade vorhandenen Untergrund angepasst werden.

Insbesondere für die Befestigung von Anschlagpunkten in noch nicht vollständig ausgehärteten Stahlbetonfertigteilen oder in noch nicht vollständig ausgehärteten, vorzugsweise bewehrten Ortbetonstrukturen ist es bei einer weiteren bevorzugten Ausführungsform des erfindungsgemäßen Befestigungselements vorgesehen, dass als Verankerungsmittel eine lastverteilende Platte vorgesehen ist, die mit der mindestens einen Gewindehülse verbunden ist. Diese kann auch einstückig mit den Gewindehülsen ausgeführt sein.

Um eine besonders stabile Verankerung zu realisieren, ist es bei einer weiteren bevorzugten Ausführungsform des erfindungsgemäßen Befestigungselements vorgesehen, dass die lastverteilende Platte in einem der Anschlussplatte gegenüberliegenden Endbereich der mindestens einen Gewindehülse angeordnet ist und parallel zur Anschlussplatte verläuft.

Die Position einer Sollknickstelle einer Gewindehülse ergibt sich, wie oben beschrieben, durch die Länge der Schraube für die Verschraubung des Anschlagpunkts und der damit einhergehenden Diskontinuität der Biegesteifigkeit entlang der Längsachse der Gewindehülse.

Im Hinblick auf die Sollknickstelle erweist es sich auch als günstig, dass das Absorberelement, vorzugsweise der Gewindeeinsatz, nicht einstückig mit dem Anschlussmittel, vorzugsweise der Gewindehülse, ausgeführt ist. Bei einstückiger Ausführung der Gewindehülse mit dem Gewindeeinsatz käme es beim Abknicken an den äußeren Gewindegängen (des Gewindeeinsatzes) zu Kerbspannungen, die zum Bruch der Gewindehülse führen könnten. Die Gewindehülse soll jedoch nicht brechen - lediglich ein Knicken ist zulässig.

Die lastverteilende Platte kann darüber hinaus zusätzliche Ösen zur Aufnahme von Bewehrungsstäben aufweisen, um den Rückhalt der lastverteilenden Platte im Untergrund weiter zu erhöhen. Entsprechend ist es bei einer weiteren bevorzugten Ausführungsform des erfindungsgemäßen Befestigungselements vorgesehen, dass die lastverteilende Platte mindestens eine zusätzliche Öse zur Aufnahme von Baustahlbewehrung umfasst. Vorzugsweise liegt dabei die Öffnung der Öse in einer Ebene senkrecht zur Ebene der lastverteilenden Platte.

Da sowohl die Befestigungsbolzen als auch die lastverteilende Platte einen Teil des Befestigungselements bilden, ist es bei einer bevorzugten Ausführungsform des erfindungsgemäßen Befestigungselements vorgesehen, dass das Befestigungselement das Verankerungsmittel umfasst.

Insbesondere die Befestigungsbolzen in Form von Gewindestangen können mit den Gewindehülsen verschraubt werden. Es ist aber auch denkbar, dass die lastverteilende Platte mit den Gewindehülsen verschraubt wird. Daher ist es bei einer bevorzugten Ausführungsform des erfindungsgemäßen Befestigungselements vorgesehen, dass das mindestens eine Verankerungsmittel (6, 7) mit dem mindestens einen Anschlussmittel verschraubbar bzw. verschraubt ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Aufsicht auf ein erfindungsgemäßes Befestigungselement mit einem Ankerhals als Anschlussmittel
- Fig. 2: eine Seitenansicht des Befestigungselements aus Fig. 1 mit einem Bewehrungsstab, welcher in einer zentralen Bewehrungsöse angeordnet ist
- Fig. 3: eine Schnittansicht gemäß der Schnittlinie A-A in Fig. 2
- Fig. 4: eine axonometrische Ansicht des Befestigungselements aus Fig. 1 mit Bewehrungsstäben, welche in zusätzlichen Ösen angeordnet sind
- Fig. 5: eine Aufsicht auf ein erfindungsgemäßes Befestigungselement mit zwei Gewindehülsen als Anschlussmittel und einer lastverteilenden Platte als Verankerungsmittel
- Fig. 6: eine Seitenansicht des Befestigungselements aus Fig. 5
- Fig. 7: eine Schnittansicht gemäß der Schnittlinie B-B in Fig. 6
- Fig. 8: eine axonometrische Ansicht des Befestigungselements aus Fig. 5 mit daran fixiertem Anschlagpunkt
- Fig. 9: eine Aufsicht auf ein erfindungsgemäßes Befestigungselement mit zwei Gewindehülsen als Anschlussmittel und zwei Befestigungsbolzen als Verankerungsmittel
- Fig. 10: eine Seitenansicht des Befestigungselements aus Fig. 9
- Fig. 11: eine Schnittansicht gemäß der Schnittlinie C-C in Fig. 10
- Fig. 12: eine Aufsicht auf die Anschlussplatte des Befestigungselements aus Fig. 9

### WEGE ZUR AUSFÜHRUNG DER ERFINDUNG

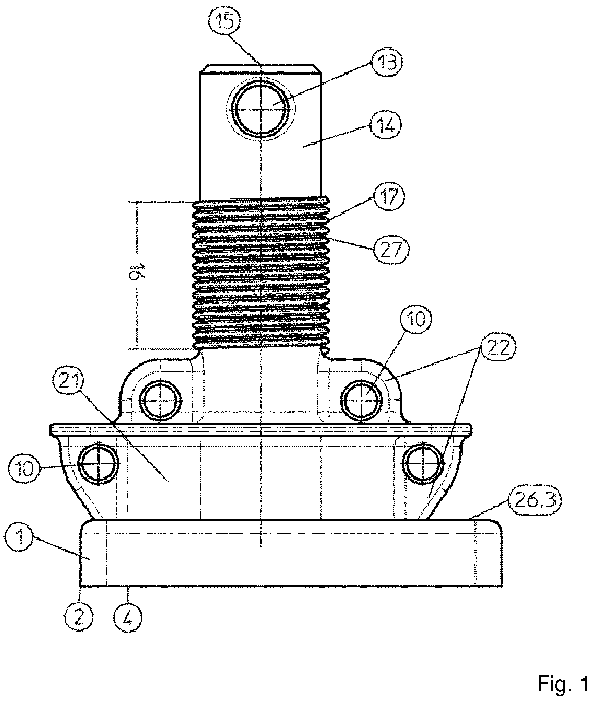

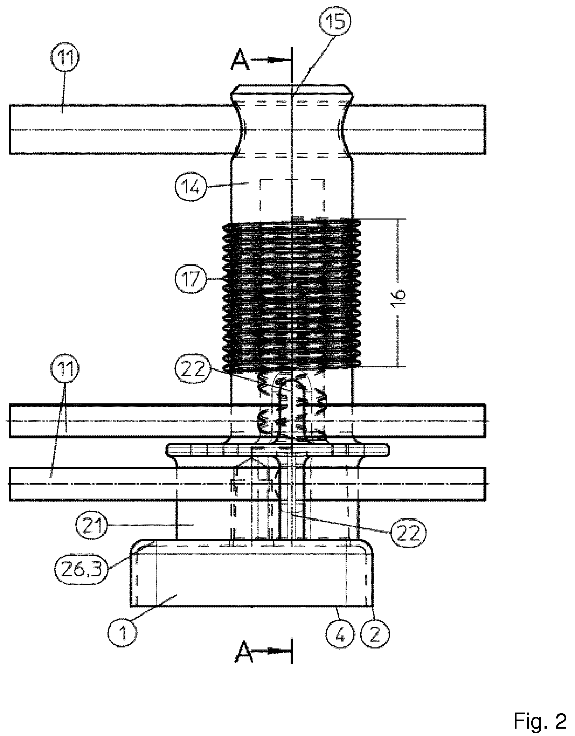

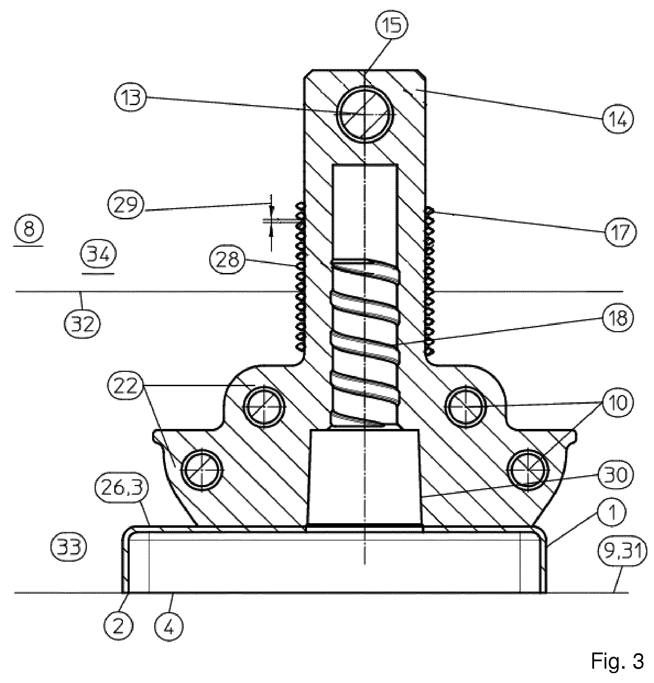

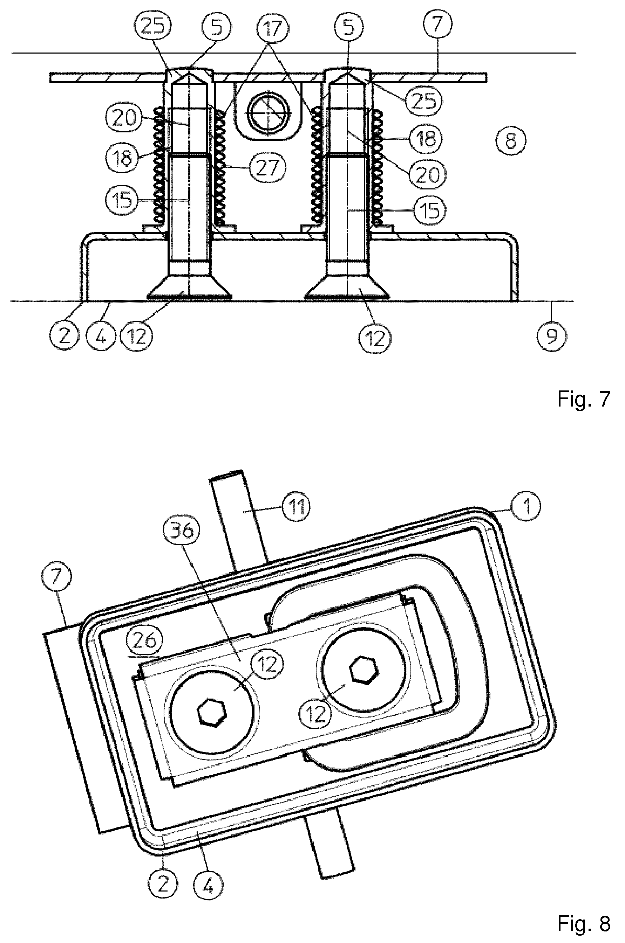

Fig. 1 zeigt ein Ausführungsbeispiel eines erfindungsgemäßen Befestigungselements für die Fixierung einer Sicherheitseinrichtung, wie z.B. eines Anschlagpunkts 36 (vgl. Fig. 8) oder eines Konsolengerüsts (nicht dargestellt), in einem Untergrund 8 (vgl. Fig. 3). Als Anschlussmittel zum Anschluss des Befestigungselements an ein im Untergrund 8 befestigtes Verankerungsmittel in Form von Baustahlbewehrung 11 (vgl. Fig. 2) weist das Befestigungselement der Fig. 1 einen Ankerhals 14 auf. Ein solcher Ankerhals 14 eignet sich insbesondere als Anschlussmittel, wenn ein Konsolengerüst oder Anschlagpunkt 36 beim Hochziehen von Wänden aus Betonfertigteilen 33 (vgl. Fig. 3) montiert bzw. fixiert werden sollen. Bei diesen Betonfertigteilen handelt es sich um Hohlwände 34 (vgl. Fig. 3), welche lagerichtig montiert und anschließend mit Beton vergossen werden. D.h. der Untergrund 8 wird in diesem Fall einerseits durch den Betonfertigteil 33 der Hohlwand 34, andererseits durch den in die Hohlwand 34 vergossenen Beton gebildet.

Der Ankerhals 14 ist in einem Endbereich bezüglich seiner Längsachse 15 mit einer zentralen Bewehrungsöse 13 versehen, die zur Aufnahme der Baustahlbewehrung 11 dient, wie in der Seitenansicht der Fig. 2 dargestellt ist.

Entlang der Längsachse 15 gesehen ist gegenüber der Bewehrungsöse 13 eine Anschlussplatte 26 angeordnet bzw. mit dem Ankerhals 14 verbunden, die sich normal zur Längsachse 15 erstreckt. Die Anschlussplatte 26 ermöglicht ein planes Anliegen des Anschlagpunkts 36 am Befestigungselement. Die Anschlussplatte 26 bildet im gezeigten Ausführungsbeispiel die Rückseite 3 eines dosenförmigen Behältnisses 1 aus. Das dosenförmige Behältnis 1 umfasst außerdem eine Vorderseite 2, die bündig mit der Oberfläche 9 des Untergrunds 8, die im Falle der Fig. 3 durch eine Oberfläche 31 des Betonfertigteils 33 gebildet wird, abschließt und eine Öffnung 4 aufweist.

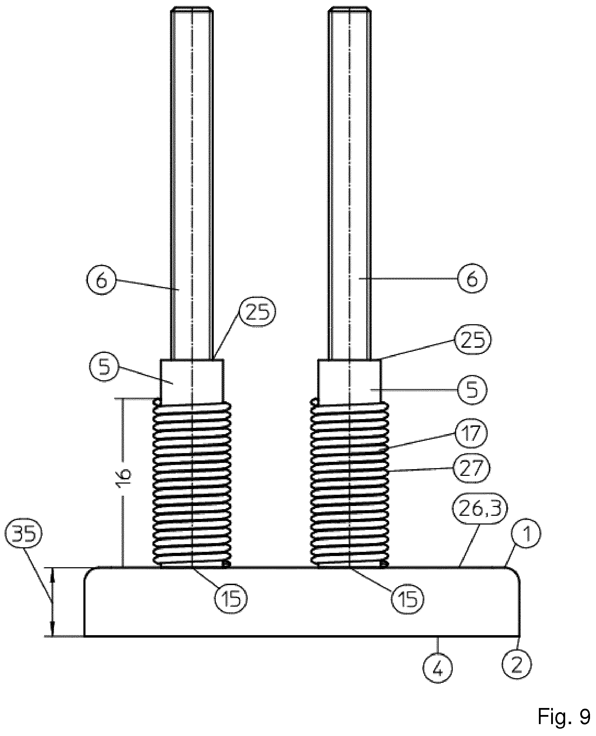

Eine Tiefe 35 (vgl. Fig. 9) des dosenförmigen Behältnisses 1 ergibt sich aus einem entlang der Längsachse 15 gemessenen Abstand zwischen Rückseite 3 und Vorderseite 2. Diese Tiefe 35 gestattet die Aufnahme des Anschlagpunkts 36, ohne dass dieser von der Oberfläche 9 des Untergrundes 8 absteht. Im gezeigten Ausführungsbeispiel erstreckt sich die Öffnung 4 im Wesentlichen über die gesamte Vorderseite 4, sodass der Anschlagpunkt 36 bequem im dosenförmigen Behältnis 1 untergebracht werden kann.

Wenn das Befestigungselement nicht genutzt wird, kann im dosenförmigen Behältnis 1 ein Montagekern (nicht dargestellt) angeordnet werden, der die Öffnung 4 vollständig verschließt und somit das Eindringen von Schmutz, Beton etc. in das dosenförmige Behältnis 1 verhindert. Vorzugsweise ist dieser Montagekern aus druckfestem Kunststoff gefertigt.

Zur Montage des Konsolengerüsts oder Anschlagpunkts 36 weist der Ankerhals 14 ein Innengewinde 18 auf, das besonders gut in der Schnittansicht der Fig. 3 - entsprechend der Schnittlinie A-A in Fig. 2 - erkennbar ist. Im in Fig. 3 gezeigten Fall ist das Innengewinde 18 zur Aufnahme von B15-Schrauben (nicht dargestellt) dimensioniert, wie sie zur Befestigung von Konsolengerüsten verwendet werden. Um die Aufnahme dieser Schrauben zu erleichtern, weist der Ankerhals 14 zur Anschlussplatte 26 hin eine in Form einer Kegelhülse aufgeweitete Ausnehmung 30 auf.

Zur Dämpfung von dynamischen Kräften entlang der Längsachse 15 des Ankerhalses 14 ist in einem Absorberabschnitt 16, der sich entlang der Längsachse 15 und des gesamten Umfangs des Ankerhalses 14 erstreckt, ein Absorberelement in Form eines aufgeschrumpften Gewindeeinsatzes 17 angeordnet. Der Gewindeeinsatz 17 ist spiralförmig, d.h. mit Windungen und einem Gewindegang 29, ausgeführt und umgibt den Ankerhals 14 vollumfänglich und entlang der Längsachse 15 abschnittsweise. Der Gewindeeinsatz 17 weist eine Oberfläche 27 auf, die sich aus der Oberfläche der Windungen ergibt. Entsprechend bildet die Oberfläche 27 ein spiralförmiges Sperrelement 28 bzw. windungsförmige Sperrelemente 28 aus, wobei das(die) Sperrelement(e) 28 in einer Richtung entlang der Längsachse 15 gesehen radial von der Längsachse 15 weg weist(weisen). Hierdurch wird eine Verzahnung bzw. eine hohe Reibung zwischen Gewindeeinsatz 17 und Untergrund 8 erzeugt.

Durch das Aufschrumpfen des Gewindeeinsatzes 17 wird eine kraftschlüssige Verbindung zwischen Gewindeeinsatz 17 und Ankerhals 14 erzielt. Bei einer dynamischen Krafteinwirkung parallel zur Längsachse 15 kann somit in Verbindung mit der Verzahnung bzw. hohen Reibung zwischen Gewindeeinsatz 17 und Untergrund 8 eine plastische Verformung in Form einer Verschiebung des Gewindeeinsatzes 17 gegenüber dem Ankerhals 14 entlang dessen Längsachse 15 erfolgen. Hierdurch wird die parallel zur Längsachse 15 auftretende dynamische Last gedämpft.

Im Ausführungsbeispiel der Fig. 3 ragt der Ankerhals 14 über eine Rückseite 32 des Betonfertigteils 33 hinaus in die mit Beton zu vergießende Hohlwand 34. Entsprechend ist auch nur ein Teil des Absorberabschnitts 16 bzw. des Gewindeeinsatzes 17 mit dem Betonfertigteil 33 verzahnt. Der Gewindeeinsatz 17 kann sich jedoch grundsätzlich trotzdem bei dynamischer Lasteinwirkung parallel zur Längsachse 15 unter starker Reibung entlang der Längsachse 15 des Ankerhalses 14 verschieben bzw. bewegen und somit als Absorberelement wirken. In diesem Fall sind aber vor allem im Hinblick auf statische Lasten zur Verstärkung der Verbindung des Befestigungselements mit dem Untergrund 8 eine zusätzliche lastverteilende Platte 21 sowie Knotenbleche 22 mit zusätzlichen Ösen 10 vorgesehen. Die zusätzliche lastverteilende Platte 21 ist dabei im Betonfertigteil 33 der Hohlwand 34 angeordnet. Durch die zusätzlichen Ösen 10 in den Knotenblechen 22 sind Stäbe der Baustahlbewehrung 11 durchgeführt, wie in Fig. 2 ersichtlich. Die versetzte Anordnung der zusätzlichen Ösen 10, die in Fig. 3 gut erkennbar ist, soll eine höhere statische Beanspruchung des Befestigungselements ermöglich - sowohl auf Zug als auch auf Druck.

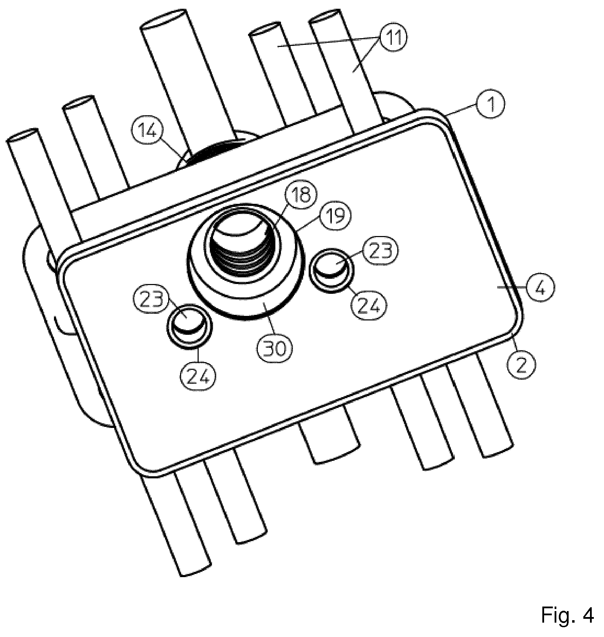

Auch in der axonometrischen Ansicht der Fig. 4 mit Blick auf die Anschlussplatte 26 sind die durch die zusätzlichen Ösen 10 geführten Stäbe der Baustahlbewehrung 11 erkennbar. Außerdem ist in der Anschlussplatte 26 eine Montageöffnung 19 sichtbar, die über dem Innengewinde 18 bzw. über der kegelhülsenförmig aufgeweiteten Ausnehmung 30 angeordnet ist. Die Montageöffnung 19 gestattet die Durchführung einer Schraube in das Innengewinde 18 - im Ausführungsbeispiel der Fig. 4 zur Befestigung eines Konsolengerüsts. Weiters sind in der Anschlussplatte 26 zwei zusätzlich Montageöffnungen 24 erkennbar, die über zusätzlichen Innengewinden 23 angeordnet sind, wobei die zusätzlichen Innengewinde 23 in der zusätzlichen lastverteilenden Platte 21 eingeschnitten sind. Die zusätzlichen Innengewinde 23 gestatten die Aufnahme von Schrauben 12 (vgl. Fig. 8), beispielsweise in der Dimensionierung M10, zur Befestigung des Anschlagpunkts 36. Entsprechend eignet sich das Befestigungselement der Fig. 1 bis Fig. 4 sowohl für die Montage eines Konsolengerüsts als auch - alternativ - für die Befestigung des Anschlagpunkts 36.

Fig. 9 zeigt eine Aufsicht auf eine Ausführungsvariante des erfindungsgemäßen Befestigungselements, die sich besonders gut für die Befestigung von Anschlagpunkten 36 in weniger festem Untergrund 8, wie z.B. Mauerwerk aus Mantelbeton, Kalksandstein, Gasbeton oder Hohlziegeln, eignet. In diesem Fall sind zwei Befestigungsbolzen 6 als Verankerungsmittel vorgesehen, die als Gewindestangen ausgeführt sind und in mit Verbundmörtel gefüllten Löchern (nicht dargestellt) im Untergrund 8 fixiert sind.

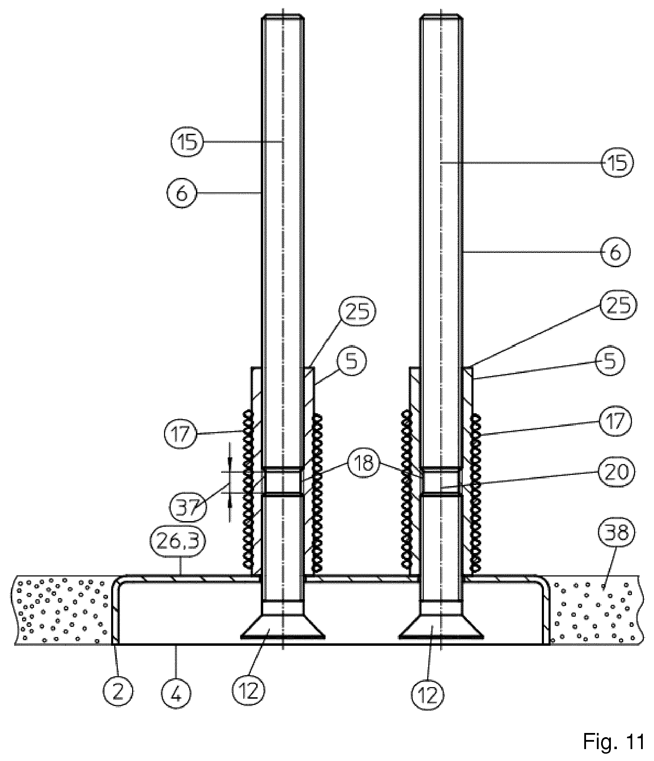

Als Anschlussmittel sind in diesem Fall zwei Gewindehülsen 5 vorgesehen, in deren Innengewinden 18 (vgl. Fig. 11) die Befestigungsbolzen 6 eingeschraubt sind. D.h. in diesem Fall sind die Verankerungsmittel bzw. Befestigungsbolzen 6 als vom Befestigungselement umfasst anzusehen. Die Gewindehülsen 5 erstrecken sich mit ihren Längsachsen 15 normal zur Anschlussplatte 26, mit welcher sie verbunden sind und die auch hier die Rückseite 3 des dosenförmigen Behältnisses 1 ausbildet. Gemäß Fig. 11 kann das dosenförmige Behältnis 1 in Putz 38 eingeputzt sein, um eine optisch ansprechende Ausgestaltung zu ermöglichen.

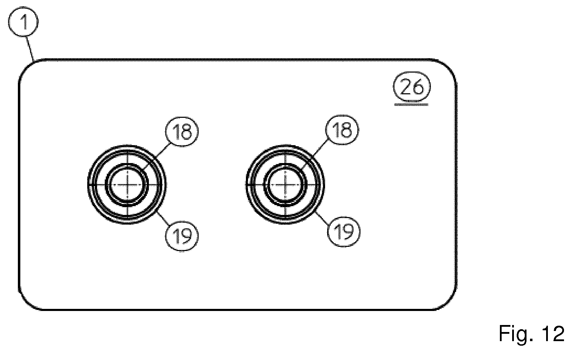

Die Befestigungsbolzen 6 sind in einem der Anschlussplatte 26 gegenüberliegenden Endbereich 25 der Gewindehülsen 5 in deren Innengewinden 18 eingeschraubt. Die Schrauben 12 zur Befestigung des Anschlagpunkts 36 werden von der Seite der Anschlagplatte 26, also von der dem Endbereich 25 gegenüberliegenden Seite, in die Innengewinde 18 geschraubt. Dabei werden die Schrauben 12 durch Montageöffnungen 19 in der Anschlussplatte 26 durchgeführt. Die Montageöffnungen 19 sind über den Innengewinden 18 angeordnet und in Fig. 12, die eine Aufsicht auf die Anschlussplatte 26 ohne montierten Anschlagpunkt 36 zeigt, gut erkennbar.

Als Absorberelemente fungieren Gewindeeinsätze 17, die in Absorberabschnitten 16 auf die Gewindehülsen 5 aufgeschrumpft sind. Bei dynamischer Krafteinwirkung parallel zu den Längsachsen 15 können die Gewindeeinsätze 17 entlang der Längsachsen 15 verschoben werden. Durch diese plastische Verformung erfolgt eine Dämpfung der dynamischen Last parallel zu den Längsachsen 15.

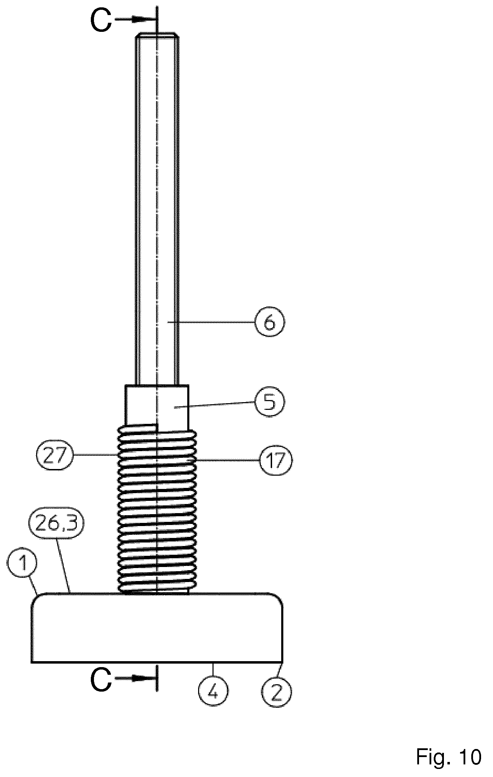

In Fig. 11, die eine Schnittansicht gemäß der Schnittlinie C-C in der Seitenansicht der Fig. 10 zeigt, ist erkennbar, dass jedes Innengewinde 18 durch den jeweiligen Befestigungsbolzen 6 und die jeweilige Schraube 12 nicht vollständig ausgefüllt ist. D.h. in den Innengewinden 18 ist jeweils ein Abstand 37 zwischen Befestigungsbolzen 6 und Schraube 12 vorhanden. Dieser nicht durch Befestigungsbolzen 6 oder Schraube 12 ausgefüllte Bereich des jeweiligen Innengewindes 18 ist innerhalb des Absorberabschnitts 16 angeordnet und stellt eine Sollknickstelle 20 dar. Deren Position und Ausdehnung entlang der Längsachsen 15 lässt sich durch Wahl der Länge der Schrauben 12 sowie durch die Einschraubtiefe der Befestigungsbolzen 6 in den Innengewinden 18 festlegen. Typischerweise ist die Biegesteifigkeit der im Bereich der Sollknickstellen 20 leeren Gewindehülsen 5 um 26% geringer als in Bereichen, in denen die Befestigungsbolzen 6 die Innengewinde 18 der Gewindehülsen 5 ausfüllen. Aus diesen Diskontinuitäten der Biegesteifigkeit resultieren die Sollknickstellen 20.

Die Sollknickstellen 20 gestatten es, auch dynamische Lasten quer zu den Längsachsen 15 durch plastische Verformung zu absorbieren bzw. zu dämpfen. D.h. hohe dynamische Lasten quer zu den Längsachsen 15 bewirken ein Abknicken - aber kein Abreißen! - der Gewindehülsen 5.

Um die Auslegung der Sollknickstellen 20 zu vereinfachen und die Biegesteifigkeit der Gewindehülsen 5 im Absorberabschnitt 16 nicht oder nur unwesentlich zu beeinflussen, ist die Biegesteifigkeit der auf die Gewindehülsen 5 aufgeschrumpften Gewindeeinsätze 17 wesentlich geringer als die Biegesteifigkeit der Gewindehülsen 5. D.h. die Biegesteifigkeit der Gewindehülsen 5 wird durch die aufgeschrumpften Gewindeeinsätze 17 nur unwesentlich verändert.

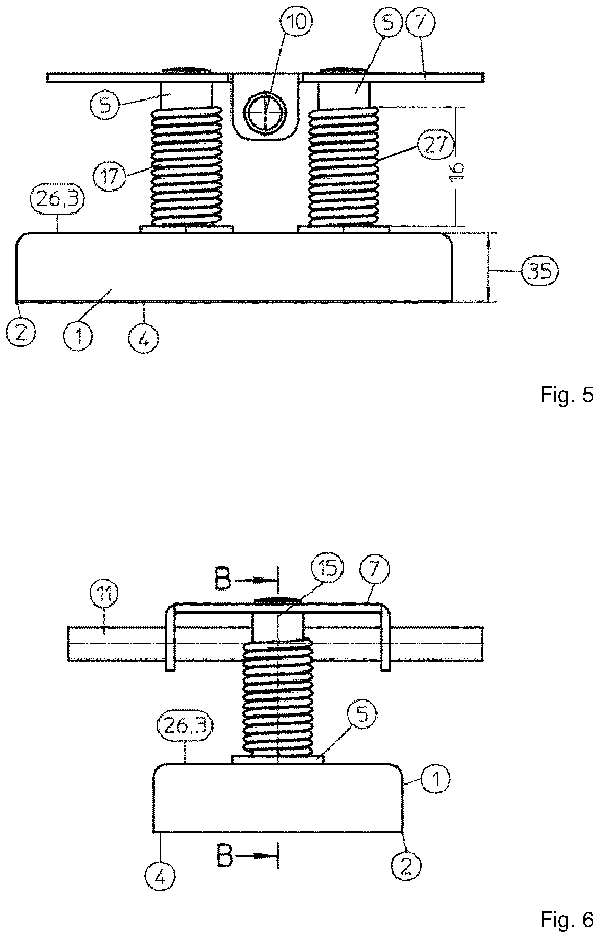

Fig. 5 zeigt eine Aufsicht auf eine Ausführungsvariante des erfindungsgemäßen Befestigungselements, die sich besonders gut für die Befestigung von Anschlagpunkten 36 in noch nicht vollständig ausgehärteten Stahlbetonfertigteilen oder in noch nicht vollständig ausgehärteten, vorzugsweise bewehrten Ortbetonstrukturen eignet. In diesem Fall ist als Verankerungsmittel eine lastverteilende Platte 7 vorgesehen, die im gezeigten Ausführungsbeispiel starr mit zwei Gewindehülsen 5 als Anschlussmittel verbunden, beispielsweise verschweißt ist. D.h. auch in diesem Fall ist das Verankerungsmittel (die lastverteilende Platte 7) als vom Befestigungselement umfasst anzusehen. Dabei stehen die Gewindehülsen 5 normal auf die lastverteilende Platte 7. Die Gewindehülsen 5 erstrecken sich mit ihren Längsachsen 15 normal zur Anschlussplatte 26, mit welcher sie verbunden sind und die auch hier die Rückseite 3 des dosenförmigen Behältnisses 1 ausbildet. Die Vorderseite 2 des dosenförmigen Behältnisses 1 schließt bündig mit der Oberfläche 9 des Untergrunds 8 ab, um eine im Untergrund 8 versenkte Anordnung des Anschlagpunkts 36 zu ermöglichen. Der im dosenförmigen Behältnis 1 angeordnete Anschlagpunkt 36 ist besonders gut in der axonometrischen Ansicht der Fig. 8 mit Blick auf die Anschlussplatte 26 erkennbar.

Die lastverteilende Platte 7 ist im der Anschlussplatte 26 gegenüberliegenden Endbereich 25 der Gewindehülsen 5 angeordnet und verläuft parallel zur Anschlussplatte 26. An der lastverteilenden Platte 7 ist eine zusätzliche Öse 10 angeordnet, durch die Baustahlbewehrung 11 geführt werden kann, wie in der Seitenansicht der Fig. 6 illustriert ist.

Als Absorberelemente fungieren auch in diesem Fall Gewindeeinsätze 17, die in Absorberabschnitten 16 auf die Gewindehülsen 5 aufgeschrumpft sind. Bei dynamischer Krafteinwirkung parallel zu den Längsachsen 15 können die Gewindeeinsätze 17 entlang der Längsachsen 15 verschoben werden. Durch diese plastische Verformung erfolgt eine Dämpfung der dynamischen Last parallel zu den Längsachsen 15.

In Fig. 7, die eine Schnittansicht gemäß der Schnittlinie B-B in Fig. 6 zeigt, sind die Schrauben 12 zur Befestigung des Anschlagpunkts 36 erkennbar, die von der Seite der Anschlagplatte 26 durch die Montageöffnungen 19 hindurchgeführt und in die Innengewinde 18 der Gewindehülsen 5 geschraubt sind. Dabei füllen die Schrauben 12 die Innengewinde 18 nicht vollständig aus. Es ergibt sich somit in jedem Innengewinde 18 ein frei bleibender Bereich, der jeweils im Absorberabschnitt 16 angeordnet ist und eine Diskontinuität bzw. schlagartige Verringerung der Biegesteifigkeit der jeweiligen Gewindehülse 5 bewirkt, wodurch eine Sollknickstelle 20 definiert wird. Deren Position und vor allem Ausdehnung entlang der Längsachsen 15 lässt sich durch Wahl der Länge der Schrauben 12 beeinflussen. Die Sollknickstellen 20 gestatten es, auch dynamische Lasten quer zu den Längsachsen 15 durch plastische Verformung zu absorbieren bzw. zu dämpfen, indem die Gewindehülsen 5 an den Sollbruchstellen 20 abknicken, aber nicht abreißen.

### BEZUGSZEICHENLISTE

- 1: Dosenförmiges Behältnis
- 2: Vorderseite
- 3: Rückseite
- 4: Öffnung
- 5: Gewindehülse
- 6: Befestigungsbolzen
- 7: Lastverteilende Platte
- 8: Untergrund
- 9: Oberfläche des Untergrunds
- 10: Zusätzliche Öse
- 11: Baustahlbewehrung
- 12: Schraube zur Befestigung eines Anschlagpunkts
- 13: Zentrale Bewehrungsöse
- 14: Ankerhals
- 15: Längsachse
- 16: Absorberabschnitt
- 17: Gewindeeinsatz
- 18: Innengewinde
- 19: Montageöffnung
- 20: Sollknickstelle
- 21: Zusätzliche lastverteilende Platte
- 22: Knotenblech
- 23: Zusätzliches Innengewinde
- 24: Zusätzliche Montageöffnung
- 25: Endbereich der Gewindehülse
- 26: Anschlussplatte
- 27: Oberfläche des Absorberelements
- 28: Sperrelement
- 29: Gewindegang des Gewindeeinsatzes
- 30: Aufgeweitete Ausnehmung des Ankerhalses
- 31: Oberfläche eines Betonfertigteils
- 32: Rückseite des Betonfertigteils
- 33: Betonfertigteil
- 34: Hohlwand
- 35: Tiefe des dosenförmigen Behältnisses
- 36: Anschlagpunkt
- 37: Abstand zwischen Befestigungsbolzen und Schraube für den Anschlagpunkt
- 38: Putz

## Patentansprüche

1. Befestigungselement für die Fixierung einer Sicherheitseinrichtung, beispielsweise eines Anschlagpunkts oder eines Gerüsts, in einem Untergrund (8), insbesondere einem Mauerwerk, welches Befestigungselement mindestens ein eine Längsachse (15) aufweisendes Anschlussmittel (5, 14) zum Anschluss des Befestigungselements an mindestens ein im Untergrund (8) befestigbares bzw. befestigtes Verankerungsmittel (6, 7, 11) umfasst, wobei das Befestigungselement weiters eine Anschlussplatte (26) umfasst, von welcher das mindestens eine Anschlussmittel (5, 14) winkelig, vorzugsweise rechtwinkelig abstehend, angeordnet ist, **dadurch gekennzeichnet, dass** das mindestens eine Anschlussmittel (5, 14) ein Innengewinde (18) zur Montage der Sicherheitseinrichtung durch Verschraubung aufweist und dass das Befestigungselement mindestens ein Absorberelement (17) umfasst, welches einen Absorberabschnitt (16) des mindestens einen Anschlussmittels (5, 14) zumindest abschnittsweise entlang der Längsachse (15) des Anschlussmittels (5, 14) kraftschlüssig umgibt und derart mit dem mindestens einen Anschlussmittel (5, 14) verbunden ist, dass es bei einer dynamischen Krafteinwirkung parallel zur Längsachse (15) entlang derselben verschiebbar ist.

2. Befestigungselement nach Anspruch 1, **dadurch gekennzeichnet, dass** die Anschlussplatte (26) mindestens eine Montageöffnung (19) aufweist, die über dem Innengewinde (18) des mindestens einen Anschlussmittels (5, 14) angeordnet ist, um die Montage der Sicherheitseinrichtung durch Verschraubung zu ermöglichen.

3. Befestigungselement nach einem der Ansprüche 1 bis 2, **dadurch gekennzeichnet, dass** die Anschlussplatte (26) eine Rückseite (3) eines dosenförmigen Behältnisses (1) ausbildet, welches weiters eine Vorderseite (2) aufweist, wobei an der Vorderseite (2) eine Öffnung (4) angeordnet ist.

4. Befestigungselement nach einem der Ansprüche 1 bis 3, **dadurch gekennzeichnet, dass** die Biegesteifigkeit des mindestens einen Absorberelements (17) geringer ist als die Biegesteifigkeit des mindestens einen Anschlussmittels (5, 14), um die Biegeeigenschaften des mindestens einen Anschlussmittels (5, 14) nicht oder nur unwesentlich zu beeinflussen.

5. Befestigungselement nach einem der Ansprüche 1 bis 4, **dadurch gekennzeichnet, dass** das mindestens eine Anschlussmittel (5, 14) eine im Absorberabschnitt (16) angeordnete Sollknickstelle (20) aufweist, um eine plastische Verformung des Befestigungselements bei dynamischer Krafteinwirkung quer zur Längsachse (15) des mindestens einen Anschlussmittels (5, 14) zu ermöglichen.

6. Befestigungselement nach einem der Ansprüche 1 bis 5, **dadurch gekennzeichnet, dass** als Anschlussmittel mindestens ein Ankerhals (14) mit Innengewinde (18) vorgesehen ist.

7. Befestigungselement nach einem der Ansprüche 1 bis 6, **dadurch gekennzeichnet, dass** als Anschlussmittel genau ein Ankerhals (14) mit Innengewinde (18) vorgesehen ist, der eine zentrale Bewehrungsöse (13) zur Aufnahme von Baustahlbewehrung (11) als Verankerungsmittel aufweist.

8. Befestigungselement nach einem der Ansprüche 6 bis 7, **dadurch gekennzeichnet, dass** an der Anschlussplatte (26) weiters eine zusätzliche lastverteilende Platte (21) und/oder Knotenbleche mit zusätzlichen Ösen (10) zur Aufnahme von Baustahlbewehrung (11) angeordnet sind.

9. Befestigungselement nach Anspruch 8, **dadurch gekennzeichnet, dass** die zusätzliche lastverteilenden Platte (21) mindestens ein zusätzliches Innengewinde (23) umfasst und dass die Anschlussplatte (26) mindestens eine zusätzliche Montageöffnung (24) aufweist, die über dem mindestens einen zusätzlichen Innengewinde (23) angeordnet ist, um die Montage einer zusätzlichen oder alternativen Sicherheitseinrichtung durch Verschraubung zu ermöglichen.

10. Befestigungselement nach einem der Ansprüche 1 bis 5, **dadurch gekennzeichnet, dass** als Anschlussmittel mindestens eine, vorzugsweise genau zwei Gewindehülse/n (5) vorgesehen ist/sind.

11. Befestigungselement nach einem der Ansprüche 1 bis 5 und 10, **dadurch gekennzeichnet, dass** das Befestigungselement das mindestens eine Verankerungsmittel (6, 7) umfasst.

12. Befestigungselement nach einem der Ansprüche 1 bis 5, 10 und 11, **dadurch gekennzeichnet, dass** das mindestens eine Verankerungsmittel (6, 7) mit dem mindestens einen Anschlussmittel (5, 14) verschraubbar bzw. verschraubt ist.

13. Befestigungselement nach einem der Ansprüche 11 bis 12, **dadurch gekennzeichnet, dass** als Verankerungsmittel mindestens ein Befestigungsbolzen (6) vorgesehen ist, der mit der mindestens einen Gewindehülse (5) verbunden, vorzugsweise verschraubt ist.

14. Befestigungselement nach einem der Ansprüche 11 bis 12, **dadurch gekennzeichnet, dass** als Verankerungsmittel eine lastverteilende Platte (7) vorgesehen ist, die mit der mindestens einen Gewindehülse (5) verbunden ist.

15. Befestigungselement nach Anspruch 14, **dadurch gekennzeichnet, dass** die lastverteilende Platte (7) in einem der Anschlussplatte (26) gegenüberliegenden Endbereich (25) der mindestens einen Gewindehülse (5) angeordnet ist und parallel zur Anschlussplatte (26) verläuft.

## Claims

1. A fastening element for fixing a safety device, for example an anchor point or a scaffold, in a substrate (8), especially a masonry structure, which fastening element comprises at least one connection means (5, 14) having a longitudinal axis (15) and intended for connecting the fastening element to at least one anchoring means (6, 7, 11) which can be or is fixed in the substrate (8), wherein the fastening element further comprises a connection plate (26) from which the at least one connection means (5, 14) is arranged at an angle, preferably projecting at a right angle, **characterized in that** the at least one connection means (5, 14) comprises an internal thread (18) for mounting the safety device by screw connection, and the fastening element comprises at least one absorber element (17) which non-positively surrounds an absorber section (16) of the at least one connection means (5, 14) at least in sections along the longitudinal axis (15) of the connection means (5, 14), and is connected to the at least one connection means (5, 14) in such a way that in the case of a dynamic action of force parallel to the longitudinal axis (15) it is displaceable along said axis.

2. A fastening element according to claim 1, **characterized in that** the connection plate (26) comprises at least one mounting opening (19) which is arranged above the internal thread (18) of the at least one connection means (5, 14) in order to enable the mounting of the safety device by a screw connection.

3. A fastening element according to one of the claims 1 to 2, **characterized in that** the connection plate (26) forms a rear side (3) of a can-shaped container (1), which further comprises a front side (2), wherein an opening (4) is arranged on the front side (2).

4. A fastening element according to one of the claims 1 to 3, **characterized in that** the bending stiffness of the at least one absorber element (17) is lower than the bending stiffness of the at least one connection means (5, 14) in order to not influence or only irrelevantly influence the bending properties of the at least one connection means (5, 14).

5. A fastening element according to one of the claims 1 to 4, **characterized in that** the at least one connection means (5, 14) comprises an predetermined bending point (20) arranged in the absorber section (16) in order to enable a plastic deformation of the fastening element in case of a dynamic action of force transversely to the longitudinal axis (15) of the at least one connection means (5, 14).

6. A fastening element according to one of the claims 1 to 5, **characterized in that** an anchor crown (14) with an internal thread (18) is provided as the connection means.

7. A fastening element according to one of the claims 1 to 6, **characterized in that** precisely one anchor crown (14) with an internal thread (18) is provided as the connection means, which anchor crown comprises a central reinforcement eye (13) for accommodating structural steel reinforcement (11) as an anchoring means.

8. A fastening element according to one of the claims 6 to 7, **characterized in that** an additional load-distributing plate (21) and/or gussets with additional eyes (10) are further arranged on the connection plate (26) for accommodating structural steel reinforcement (11).

9. A fastening element according to claim 8, **characterized in that** the additional load-distributing plate (21) comprises at least one additional internal thread (23), and the connection plate (26) comprises at least one additional mounting opening (24) which is arranged above the at least one additional internal thread (23) in order to enable the mounting of an additional or alternative safety device by a screw connection.

10. A fastening element according to one of the claims 1 to 5, **characterized in that** at least one, preferably precisely two, threaded sleeve(s) (5) is/are provided as the connection means.

11. A fastening element according to one of the claims 1 to 5 and 10, **characterized in that** the fastening element comprises the at least one anchoring means (6, 7).

12. A fastening element according to one of the claims 1 to 5, 10 and 11, **characterized in that** the at least one anchoring means (6, 7) can be or is screwed together with the at least one connection means (5, 14).

13. A fastening element according to one of the claims 11 to 12, **characterized in that** at least one mounting bolt (6) is provided as the anchoring means, which bolt is connected to the at least one threaded sleeve (5), preferably screwed together with said sleeve.

14. A fastening element according to one of the claims 11 to 12, **characterized in that** a load-distributing plate (7) is provided as the anchoring means, which plate is connected to the at least one threaded sleeve (5).

15. A fastening element according to claim 14, **characterized in that** the load-distributing plate (7) is arranged in an end region (25) of the at least one threaded sleeve (5) which end region (25) is opposite the connection plate (26) and which load-distributing plate (7) extends parallel to the connection plate (26).

## Revendications

1. Élément de fixation pour la fixation d'un dispositif de sécurité, par exemple d'un point d'accrochage ou d'un échafaudage, dans un substrat (8), en particulier une maçonnerie, lequel élément de fixation comprend au moins un moyen de raccordement (5, 14) présentant un axe longitudinal (15) pour raccorder l'élément de fixation à au moins un moyen d'ancrage (6, 7, 11) pouvant être fixé ou étant fixé dans le substrat, l'élément de fixation comprenant en outre une plaque de raccordement (26) à partir de laquelle l'au moins un moyen de raccordement (5, 14) est disposé en faisant un angle, de préférence en s'écartant à angle droit, **caractérisé en ce que** l'au moins un moyen de raccordement (5, 14) présente un filetage intérieur (18) pour le montage du dispositif de sécurité par vissage et **en ce que** l'élément de fixation comprend au moins un élément absorbant (17) qui entoure une partie absorbante (16) de l'au moins un moyen de raccordement (5, 14) au moins en partie le long de l'axe longitudinal (15) du moyen de raccordement (5, 14) en friction et est relié à l'au moins un moyen de raccordement (5, 14) de telle façon qu'il peut être déplacé le long de l'axe longitudinal (15) lorsqu'une force dynamique est exercée parallèlement à celui-ci.

2. Élément de fixation selon la revendication 1, **caractérisé en ce que** la plaque de raccordement (26) présente au moins une ouverture de montage (19) qui est disposée au-dessus du filetage intérieur (18) de l'au moins un moyen de raccordement (5, 14) pour permettre le montage du dispositif de sécurité par vissage.

3. Élément de fixation selon l'une des revendications 1 à 2, **caractérisé en ce que** la plaque de raccordement (26) forme une face arrière (3) d'un contenant (1) en forme de boîte, lequel présente en outre une face avant (2), une ouverture (4) étant disposée dans la face avant (2).

4. Élément de fixation selon l'une des revendications 1 à 3, **caractérisé en ce que** la rigidité en flexion de l'au moins un élément absorbant (17) est plus faible que la rigidité en flexion de l'au moins un moyen de raccordement (5, 14), afin de ne pas influencer ou de ne pas influencer notablement les propriétés en flexion de l'au moins un moyen de raccordement (5, 14).

5. Élément de fixation selon l'une des revendications 1 à 4, **caractérisé en ce que** l'au moins un moyen de raccordement (5, 14) présente un point de pliage nominal (20) disposé dans la section absorbante (16) afin de permettre une déformation plastique de l'élément de fixation sous l'effet d'une force dynamique agissant perpendiculairement à l'axe longitudinal (15) de l'au moins un moyen de raccordement (5, 14).

6. Élément de fixation selon l'une des revendications 1 à 5, **caractérisé en ce que** le moyen de raccordement prévu est au moins un collet d'ancrage (14) à filetage intérieur (18).

7. Élément de fixation selon l'une des revendications 1 à 6, **caractérisé en ce que** le moyen de raccordement prévu est exactement un collet d'ancrage (14) à filetage intérieur (18) qui présente un oeillet d'armature central (13) destiné à recevoir une armature en acier de construction (11) servant de moyen d'ancrage.

8. Élément de fixation selon l'une des revendications 6 à 7, **caractérisé en ce qu'**une plaque supplémentaire (21) répartissant la charge et/ou des tôles de gousset avec des oeillets (10) supplémentaires sont en outre disposés sur la plaque de raccordement (26) pour recevoir une armature en acier de construction (11).

9. Élément de fixation selon la revendication 8, **caractérisé en ce que** la plaque supplémentaire (21) répartissant la charge comporte au moins un filetage intérieur supplémentaire (23) et **en ce que** la plaque de raccordement (26) présente au moins une ouverture de montage supplémentaire (24), qui est disposée au-dessus de l'au moins un filetage intérieur supplémentaire (23) afin de permettre le montage d'un dispositif de sécurité supplémentaire ou d'un autre dispositif de sécurité par vissage.

10. Élément de fixation selon l'une des revendications 1 à 5, **caractérisé en ce que** le moyen de raccordement prévu est au moins une douille filetée, de préférence exactement deux douilles filetées (5).

11. Élément de fixation selon l'une des revendications 1 à 5 et 10, **caractérisé en ce que** l'élément de fixation comprend l'au moins un moyen d'ancrage (6, 7).

12. Élément de fixation selon l'une des revendications 1 à 5, 10 et 11, **caractérisé en ce que** l'au moins un moyen d'ancrage (6, 7) peut être vissé ou est vissé avec l'au moins un moyen de raccordement (5, 14).

13. Élément de fixation selon l'une des revendications 11 à 12, **caractérisé en ce que** le moyen d'ancrage prévu est au moins un boulon de fixation (6) qui est relié, de préférence vissé, avec l'au moins une douille filetée (5).

14. Élément de fixation selon l'une des revendications 11 à 12, **caractérisé en ce que** le moyen d'ancrage prévu est une plaque répartissant la charge (7) qui est reliée à l'au moins une douille filetée (5).

15. Élément de fixation selon la revendication 14, **caractérisé en ce que** la plaque répartissant la charge (7) est disposée dans une partie d'extrémité (25) de l'au moins une douille filetée (5) en face de la plaque de raccordement (26), la plaque répartissant la charge (7) est parallèle à la plaque de raccordement (26).
